# EUROPÄISCHE PATENTSCHRIFT

(11) **EP 2 800 637 B1**
(45) Veröffentlichungstag und Bekanntmachung des Hinweises auf die Patenterteilung: **17.05.2017**
(21) Anmeldenummer: 12809708.6
(22) Anmeldetag: 13.12.2012
(51) Int. Cl.: B08B 3/02, F22B 1/28

(54) **DAMPFREINIGUNGSGERÄT**
VAPOUR CLEANING DEVICE
APPAREIL DE NETTOYAGE À LA VAPEUR

(30) Priorität: 05.01.2012 DE 102012100070
(43) Veröffentlichungstag der Anmeldung: 12.11.2014
(73) Patentinhaber: Alfred Kärcher GmbH & Co. KG, 71364 Winnenden (DE)
(72) Erfinder: SCHÖNEWALD, Michael, 71111 Waldenbuch (DE); DUX, Tobias, 73614 Schorndorf (DE); HOLEK, Christof, 71540 Murrhardt-Fornsbach (DE)
(74) Vertreter: Hoeger, Stellrecht & Partner Patentanwälte mbB
(86) Internationale Anmeldenummer: PCT/EP2012/075445
(87) Internationale Veröffentlichungsnummer: WO 2013/102543

(56) Entgegenhaltungen:
- EP-A2- 1 527 827
- EP-B1- 0 809 544
- WO-A1-2005/023442

## Beschreibung

Die Erfindung betrifft ein Dampfreinigungsgerät mit einem elektrisch beheizbaren Vorratstank für eine Flüssigkeit, der einen Dampfauslass und einen Flüssigkeitsauslass aufweist, und mit einer Mischeinrichtung, die über eine erste Verbindungsleitung mit dem Dampfauslass und über eine zweite Verbindungsleitung mit dem Flüssigkeitsauslass verbunden ist und die einen gemeinsamen Auslass für flüssiges und dampfförmiges Medium aufweist, und mit einer einen Eingang und einen Ausgang aufweisenden Flüssigkeitsentnahmeleitung, wobei Flüssigkeit aus dem Innenraum des Vorratstanks vom Eingang der Flüssigkeitsentnahmeleitung über deren Ausgang der Mischeinrichtung zuführbar ist, wobei der Strömungsquerschnitt des Eingangs der Flüssigkeitsentnahmeleitung größer ist als der Strömungsquerschnitt des Flüssigkeitsauslasses.

Ein derartiges Dampfreinigungsgerät ist aus der EP 0 809 544 B1 bekannt. Es ermöglicht die Reinigung unterschiedlichster Flächen, insbesondere die Reinigung von Hartflächen. Es umfasst einen Vorratstank für eine Flüssigkeit, insbesondere für Wasser. Der Vorratstank kann elektrisch beheizt werden, so dass im Vorratstank Dampf entsteht. Der Dampf kann über den Dampfauslass des Vorratstanks und eine erste Verbindungsleitung einer Mischeinrichtung zugeführt werden kann, von der der Dampf über einen Auslass abgegeben werden kann. Der Dampf kann auf die zu reinigende Fläche gerichtet werden. Dies ermöglicht es, die Fläche ohne Verwendung von Chemikalien zu reinigen. Um die Reinigungswirkung zu steigern, kann dem Dampf Flüssigkeit beigemischt werden, die dem Vorratstank entnommen und über eine zweite Verbindungsleitung der Mischeinrichtung zugeführt werden kann. Die Mischeinrichtung ermöglicht es, die entnommene Flüssigkeit dem Dampf beizumischen, so dass über den Auslass der Mischeinrichtung ein Gemisch aus Flüssigkeit und Dampf abgegeben werden kann. Zur Entnahme der Flüssigkeit aus dem Innenraum des Vorratstanks weist das Dampfreinigungsgerät eine Flüssigkeitsentnahmeleitung auf mit einem Eingang und einem Ausgang.

Die Flüssigkeit kann somit ebenso wie der Dampf dem Vorratstank entnommen werden und mit Hilfe eines Stellelements der Mischeinrichtung kann die Abgabe von wahlweise dampfförmigem Medium oder einem Gemisch von dampfförmigem und flüssigem Medium eingestellt werden. Derartige Mischeinrichtungen sind dem Fachmann aus der DE 102 58 832 B4 bekannt.

Die Flüssigkeitsentnahmeleitung ist üblicherweise in Form eines Steigrohrs ausgebildet, das in den Innenraum des Vorratstanks eintaucht. Der in dem beheizten Vorratstank herrschende Dampfdruck drückt Flüssigkeit aus dem Vorratstank über das Steigrohr zum Flüssigkeitsauslass des Vorratstanks.

Häufig scheidet sich während des Betriebs des Dampfreinigungsgerätes im Vorratstank Kalk ab. Dies führt zu einer zunehmenden Konzentration von Kalkpartikeln im Vorratstank. Die Kalkpartikel sammeln sich vor allem am Boden des Vorratstanks. Bei Entnahme von Flüssigkeit können Kalkpartikel von der Flüssigkeit mitgerissen werden. Dies birgt die Gefahr, dass die mitgerissenen Kalkpartikel die Mischeinrichtung verstopfen.

Aufgabe der vorliegenden Erfindung ist es daher, ein Dampfreinigungsgerät der eingangs genannten Art derart weiterzubilden, dass die Gefahr einer Verstopfung der Mischeinrichtung verringert wird.

Diese Aufgabe wird durch ein Dampfreinigungsgerät mit den Merkmalen von Patentanspruch 1 gelöst.

In die Erfindung fließt der Gedanke mit ein, dass im Vorratstank befindliche Kalkpartikel vor allem dann von der aus dem Innenraum des Vorratstanks herausströmenden Flüssigkeit mitgerissen werden, wenn die Flüssigkeit im Bereich des Eingangs der Flüssigkeitsentnahmeleitung eine hohe Strömungsgeschwindigkeit aufweist. Die Strömungsgeschwindigkeit ist vom Strömungsquerschnitt abhängig. Je größer der Strömungsquerschnitt des Eingangs gewählt wird, desto geringer ist die Strömungsgeschwindigkeit der Flüssigkeit und desto geringer ist die Wahrscheinlichkeit, dass von der Flüssigkeit Kalkpartikel aus dem Innenraum des Vorratstanks mitgerissen werden. Durch Wahl eines verhältnismäßig großen Strömungsquerschnitts am Eingang der Flüssigkeitsentnahmeleitung kann somit die Gefahr deutlich verringert werden, dass zusammen mit der Flüssigkeit auch Kalkpartikel dem Innenraum des Vorratstanks entnommen werden. Im Bereich des Flüssigkeitsauslasses des Vorratstanks kann dagegen der Strömungsquerschnitt deutlich geringer als am Eingang der Flüssigkeitsentnahmeleitung gewählt werden. Ein eher geringer Strömungsquerschnitt am Flüssigkeitsauslass hat den Vorteil, dass die Wärmeverluste des Vorratstanks gering gehalten werden können. Außerdem bewirkt der eher geringe Strömungsquerschnitt, dass die Flüssigkeit im Bereich des Flüssigkeitsauslasses eine hohe Strömungsgeschwindigkeit aufweist. Dies verringert das Risiko, dass sich Kalkpartikel im Bereich des Flüssigkeitsauslasses ablagern.

Gemäß der Erfindung ist der Strömungsquerschnitt des Eingangs der Flüssigkeitsentnahmeleitung mindestens zehnmal so groß wie der Strömungsquerschnitt des Flüssigkeitsauslasses.

Insbesondere kann vorgesehen sein, dass der Eingang der Flüssigkeitsentnahmeleitung und der Flüssigkeitsauslass des Vorratsbehälters einen kreisförmigen Strömungsquerschnitt aufweisen, wobei der Durchmesser des Eingangs der Flüssigkeitsentnahmeleitung mindestens fünfmal größer ist als der Durchmesser des Flüssigkeitsauslasses.

Der Flüssigkeitsauslass ist bei einer vorteilhaften Ausführungsform der Erfindung in Form einer Durchgangsöffnung des Vorratstanks ausgestaltet, in die die Flüssigkeitsentnahmeleitung mit einem Endabschnitt eintaucht. Der Endabschnitt der Flüssigkeitsentnahmeleitung bildet deren Ausgang. Vorzugsweise verkleinert sich der Strömungsquerschnitt der Flüssigkeitsentnahmeleitung im Bereich zwischen dem Eingang und dem Ausgang.

Bei einer vorteilhaften Ausführungsform verkleinert sich der Strömungsquerschnitt der Flüssigkeitsentnahmeleitung über mindestens eine Stufe. Die Bereitstellung einer Stufe hat den Vorteil, dass sich die Strömungsgeschwindigkeit der aus dem Vorratstank herausströmenden Flüssigkeit im Bereich der Stufe der Flüssigkeitsentnahmeleitung abrupt ändert. Von der Flüssigkeit eventuell doch noch mitgeführte Kalkpartikel scheiden sich daher vorzugsweise an der Stufe ab und können dadurch nicht über den Flüssigkeitsauslass zur Mischeinrichtung gelangen.

Vorteilhafterweise verkleinert sich der Strömungsquerschnitt der Flüssigkeitsentnahmeleitung zumindest in einem Leitungsabschnitt kontinuierlich. Eine kontinuierliche Verkleinerung des Strömungsquerschnitts geht einher mit einer kontinuierlichen Zunahme der Strömungsgeschwindigkeit der Flüssigkeit. Dies hat sich als vorteilhaft erwiesen, um die Gefahr besonders gering zu halten, dass Kalkpartikel von der Flüssigkeit mitgerissen werden.

Günstigerweise umfasst die Flüssigkeitsentnahmeleitung mindestens einen kegelstumpfförmigen Leitungsabschnitt.

Die Flüssigkeitsentnahmeleitung kann beispielsweise in Form einer Steigleitung ausgestaltet sein, die in den Vorratstank eintaucht.

Die Steigleitung ist vorzugsweise an einer Deckenwand des Vorratstanks gehalten.

Bevorzugt ist die Steigleitung hauben- oder glockenförmig ausgebildet.

Von Vorteil ist es, wenn die Steigleitung einen kreisförmigen, ovalen oder mehreckförmigen Querschnitt aufweist.

Bei einer besonders bevorzugten Ausgestaltung des erfindungsgemäßen Dampfreinigungsgeräts schließt sich an den Eingang der Flüssigkeitsentnahmeleitung ein erster Leitungsabschnitt der Flüssigkeitsentnahmeleitung mit gleich bleibendem Strömungsquerschnitt an. In diesem ersten Leitungsabschnitt weist die dem Innenraum des Vorratstanks entnommene Flüssigkeit gleich bleibend eine geringe Strömungsgeschwindigkeit auf. Der erste Leitungsabschnitt hat die Funktion, die Bewegung der Flüssigkeit zu beruhigen. Dadurch kann die Gefahr besonders gering gehalten werden, dass von der Flüssigkeit Kalkpartikel mitgerissen werden.

Die Länge des ersten Leitungsabschnitts beträgt vorzugsweise mindestens etwa ein Viertel des Durchmessers des Strömungsquerschnitts des Eingangs der Flüssigkeitsentnahmeleitung.

Von Vorteil ist es, wenn die Flüssigkeitsentnahmeleitung einen rohrförmigen Endabschnitt aufweist, der sich in Strömungsrichtung der aus dem Innenraum des Vorratstanks herausströmenden Flüssigkeit an eine den Strömungsquerschnitt der Flüssigkeitsentnahmeleitung verringernde Stufe anschließt.

Der rohrförmige Endabschnitt weist bevorzugt einen gleich bleibenden Strömungsquerschnitt auf.

Bevorzugt taucht der rohrförmige Endabschnitt der Flüssigkeitsentnahmeleitung in eine Durchgangsöffnung des Vorratstanks ein, die den Flüssigkeitsauslass ausbildet.

Um die Gefahr besonders gering zu halten, dass von der aus dem Vorratstank herausströmenden Flüssigkeit Kalkpartikel mitgerissen werden, ist bei einer vorteilhaften Ausführungsform der Erfindung in der Flüssigkeitsentnahmeleitung mindestens eine Prallwand angeordnet. Die die Flüssigkeitsentnahmeleitung durchströmende Flüssigkeit wird an der Prallwand stark umgelenkt, so dass sich eventuell mitgeführte Kalkpartikel vorzugsweise an der Prallwand abscheiden.

Besonders günstig ist es, wenn in der Flüssigkeitsentnahmeleitung mehrere Prallwände angeordnet sind, die ein Strömungslabyrinth ausbilden.

Bevorzugt ist am Eingang der Flüssigkeitsentnahmeleitung ein Sieb oder Filter angeordnet. Die aus dem Vorratstank herausströmende Flüssigkeit durchströmt das Sieb bzw. den Filter und mitgeführte Kalkpartikel können sich am Sieb bzw. am Filter abscheiden.

Günstig ist es, wenn im Vorratstank ein Füllstandssensor angeordnet ist, mit dessen Hilfe der Füllstand des Vorratstanks erfasst werden kann. Erreicht der Füllstand einen unteren Grenzwert, so kann dies dem Benutzer angezeigt werden, so dass der Benutzer den Vorratstank nachfüllen kann. Es kann auch vorgesehen sein, dass das Dampfreinigungsgerät zusätzlich zum elektrisch beheizbaren Vorratstank einen unbeheizten Flüssigkeitsbehälter aufweist sowie eine Pumpe, die in Abhängigkeit vom Füllstand des Vorratstanks gesteuert wird. Erreicht der Füllstand des Vorratstanks einen unteren Grenzwert, so kann mittels der Pumpe Flüssigkeit aus dem Flüssigkeitsbehälter in den Vorratstank gepumpt werden. Die Pumpe kann ausgeschaltet werden, wenn der Füllstand im Vorratstank einen oberen Grenzwert erreicht. Dies ermöglicht es, bedarfsweise Flüssigkeit aus dem Flüssigkeitsbehälter in den beheizbaren Vorratstank zu pumpen. Der elektrisch beheizbare Vorratstank kann daher ein verhältnismäßig geringes Volumen aufweisen. Dies ermöglicht es, das Dampfreinigungsgerät bereits nach kurzer Aufheizzeit des Vorratstanks in Betrieb zu setzen.

Der Füllstandssensor ist günstigerweise in Umfangsrichtung von einem Schutzelement umgeben. Das Schutzelement weist bei einer vorteilhaften Ausführungsform eine kegelstumpfförmige Schutzwand auf, die den Füllstandssensor in Umfangsrichtung umgibt.

Bei einer besonders bevorzugten Ausgestaltung der Erfindung ist die Flüssigkeitsentnahmeleitung in das Schutzelement integriert. Die Flüssigkeitsentnahmeleitung und das den Füllstandssensor umgebende Schutzelement bilden günstigerweise ein einteiliges Bauelement des Dampfreinigungsgerätes aus.

Dies erleichtert die Montage des Dampfreinigungsgerätes und senkt dessen Herstellungskosten.

Die Flüssigkeitsentnahmeleitung kann an einer Wand des Vorratstanks, insbesondere an einer Deckenwand des Vorratstanks, festgelegt sein.

Von besonderem Vorteil ist es, wenn die Flüssigkeitsentnahmeleitung mit einer Wand des Vorratstanks einstückig verbunden ist. Beispielsweise kann vorgesehen sein, dass der Vorratstank ein wannenförmiges Unterteil und ein haubenförmiges Oberteil aufweist, die lösbar miteinander verbunden, insbesondere miteinander verschraubt sind, wobei die Flüssigkeitsentnahmeleitung an das Oberteil angeformt ist.

Die nachfolgende Beschreibung vorteilhafter Ausführungsformen der Erfindung dient im Zusammenhang mit der Zeichnung der näheren Erläuterung. Es zeigen:
- Figur 1:: eine schematische Darstellung einer ersten Ausführungsform eines erfindungsgemäßen Dampfreinigungsgerätes mit einer Schnittansicht eines beheizbaren Vorratstanks;
- Figur 2:: eine schematische Darstellung einer zweiten Ausführungsform eines erfindungsgemäßen Dampfreinigungsgerätes mit einer Schnittansicht eines beheizbaren Vorratstanks;
- Figur 3:: eine schematische Darstellung einer dritten Ausführungsform eines erfindungsgemäßen Dampfreinigungsgerätes mit einer Schnittansicht eines beheizbaren Vorratstanks, und
- Figur 4:: eine schematische Darstellung einer vierten Ausführungsform eines erfindungsgemäßen Dampfreinigungsgerätes mit einer Schnittansicht eines beheizbaren Vorratstanks.

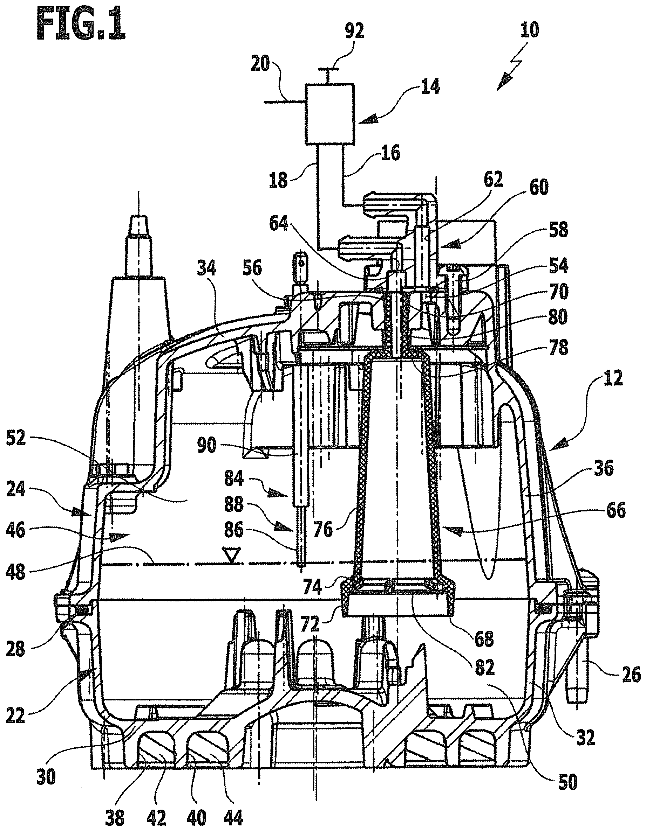

In Figur 1 ist schematisch eine erste Ausführungsform eines erfindungsgemäßen Dampfreinigungsgerätes dargestellt, das insgesamt mit dem Bezugszeichen 10 belegt ist. Es umfasst einen elektrisch beheizbaren Vorratstank 12 für eine Flüssigkeit, vorzugsweise für Wasser. Außerdem weist das Dampfreinigungsgerät 10 eine Mischeinrichtung 14 auf, die über eine erste Verbindungsleitung 16 und eine zweite Verbindungsleitung 18 mit dem Vorratstank 12 in Strömungsverbindung steht und die einen gemeinsamen Auslass 20 zur Abgabe von flüssigem und dampfförmigem Medium aufweist. An den Auslass 20 kann eine an sich bekannte und deshalb in der Zeichnung nicht dargestellte Auslassleitung angeschlossen werden, die an ihrem freien Ende ein Abgabeorgan trägt, beispielsweise eine Reinigungsdüse, mit deren Hilfe ein Gemisch aus dampfförmigem und flüssigem Medium oder bei Bedarf auch nur das dampfförmige Medium auf eine zu reinigende Fläche gerichtet werden kann.

Der Vorratstank 12 umfasst ein Unterteil 22 und ein Oberteil 24, die mittels Verbindungsschrauben 26 unter Zwischenlage eines Dichtrings 28 miteinander verschraubt sind. Das Unterteil 22 ist wannenartig ausgebildet und weist eine Bodenwand 30 auf, an die sich eine untere Seitenwand 32 anschließt. Das Oberteil 24 ist nach Art einer Haube ausgestaltet und weist eine Deckenwand 34 auf, an die sich eine obere Seitenwand 36 anschließt, die der unteren Seitenwand 32 zugewandt ist.

Unterseitig sind in die Bodenwand 30 eine äußere Ringnut 38 und eine innere Ringnut 40 eingeformt. Die äußere Ringnut 38 nimmt einen äußeren Heizleiter 42 auf und die innere Ringnut 40 nimmt einen inneren Heizleiter 44 auf. Mit Hilfe der beiden Heizleiter 42, 44 kann der Vorratstank 12 beheizt werden, so dass im Vorratstank 12 befindliche Flüssigkeit, vorzugsweise Wasser, verdampft. Der Innenraum 46 des Vorratstanks 12 wird von der darin befindlichen Flüssigkeit in einen unterhalb des Flüssigkeitsspiegels 48 befindlichen Wasserraum 50 und einen oberhalb des Flüssigkeitsspiegels 48 befindlichen Dampfraum 52 unterteilt.

In die Deckenwand 34 des Vorratstanks 12 ist eine erste Durchgangsöffnung eingeformt, die einen Dampfauslass 54 ausbildet. Außerdem ist in die Deckenwand 34 eine zweite Durchbrechung eingeformt, die einen Flüssigkeitsauslass 56 ausbildet. Außenseitig ist an der Deckenwand 34 mit Hilfe von Verbindungsschrauben 58 ein Anschlussteil 60 festgelegt, das eine fluchtend zum Dampfauslass 54 ausgerichtete Dampfauslassleitung 62 und eine fluchtend zum Flüssigkeitsauslass 56 ausgerichtete Flüssigkeitsauslassleitung 64 umfasst. Der dem Dampfauslass 54 abgewandte Endbereich der Dampfauslassleitung 62 ist als Nippel ausgebildet, an den die erste Verbindungsleitung 16 angeschlossen ist, über die die Dampfauslassleitung 62 mit der Mischeinrichtung 14 in Strömungsverbindung steht. In entsprechender Weise ist der dem Flüssigkeitsauslass 56 abgewandte Endbereich der Flüssigkeitsauslassleitung 64 als Nippel ausgebildet, an den die zweite Verbindungsleitung 18 angeschlossen ist, über die die Flüssigkeitsauslassleitung 64 mit der Mischeinrichtung 14 in Strömungsverbindung steht.

An der Deckenwand 34 ist eine Flüssigkeitsentnahmeleitung 66 gehalten, die so weit in den Innenraum 46 des Vorratstanks 12 eintaucht, dass ihr Eingang 68 den Wasserraum 50 erreicht, das heißt der Eingang 68 ist unterhalb des Flüssigkeitsspiegels 48 angeordnet. Die Flüssigkeitsentnahmeleitung 66 ist nach Art einer Steigleitung ausgebildet, die in der dargestellten Ausführungsform einen kreisförmigen Strömungsquerschnitt aufweist. Im Bereich zwischen dem Eingang 68 und einem Ausgang 70 der Flüssigkeitsentnahmeleitung 66 verkleinert sich deren Strömungsquerschnitt.

An den Eingang 68 schließt sich ein erster Leitungsabschnitt 72 der Flüssigkeitsentnahmeleitung 66 mit gleich bleibendem Strömungsquerschnitt an, der über eine konische Verengung 74 in einen zweiten Leitungsabschnitt 76 übergeht. Der zweite Leitungsabschnitt 76 ist im Wesentlichen kegelstumpfförmig ausgebildet und geht über eine nach innen gerichtete Stufe 78 in einen rohrförmigen dritten Leitungsabschnitt 80 über, der einen gleich bleibenden Strömungsquerschnitt aufweist und den Flüssigkeitsauslass 56 durchgreift.

Im Bereich der konischen Verengung 74 ist in der Flüssigkeitsauslassleitung 64 ein Sieb 82 angeordnet.

Die Deckenwand 34 wird mittig von einem Füllstandssensor 84 durchgriffen, der in den Innenraum 46 des Vorratstanks 12 eintaucht und eine Elektrode 86 aufweist, die bis auf einen freien Endbereich 88 von einem an der Elektrode 86 unmittelbar anliegenden Schutzmantel 90 umgeben ist.

Mit Hilfe des Füllstandssensors 86 kann der Füllstand des Vorratstanks 12 erfasst und dem Benutzer an einem an sich bekannten und deshalb zur Erzielung einer besseren Übersicht in der Zeichnung nicht dargestellten Anzeigegerät angezeigt werden. Der in Figur 1 dargestellte Flüssigkeitsspiegel 48 bildet hierbei einen unteren Grenzwert des Füllstandes. Ist dieser Grenzwert erreicht, so wird dies dem Benutzer angezeigt, so dass er den Vorratstank 12 über eine in der Zeichnung nicht dargestellte, an sich bekannte Befüllungsöffnung mit Flüssigkeit befüllen kann.

Alternativ kann vorgesehen sein, dass das Dampfreinigungsgerät 10 zusätzlich zum beheizbaren Vorratstank 12 einen unbeheizbaren Flüssigkeitsbehälter aufweist sowie eine Pumpe, mit deren Hilfe Flüssigkeit vom Flüssigkeitsbehälter zum Vorratstank 12 gepumpt werden kann, wenn der Füllstand den Flüssigkeitsspiegel 48 erreicht.

Wird der Vorratstank 12 mit Hilfe der beiden Heizleiter 42, 44 beheizt, so bildet sich eine zunehmende Dampfmenge aus. Der Dampf kann über den Dampfauslass 54, die Dampfauslassleitung 62 und die erste Verbindungsleitung 16 der Mischeinrichtung 14 zugeführt werden. Der Dampf übt auf die im Vorratstank 12 befindliche Flüssigkeit einen Druck aus, so dass über die Flüssigkeitsentnahmeleitung 66 und die sich daran anschließende Flüssigkeitsauslassleitung 64 und die zweite Verbindungsleitung 18 auch erwärmte Flüssigkeit der Mischeinrichtung 14 zugeführt werden kann. Die Mischeinrichtung 14 weist ein Stellelement 92 auf, das in der dargestellten Ausführungsform nach Art eines Drehknopfes ausgebildet ist und das es dem Benutzer erlaubt, die Abgabemenge an Dampf und Flüssigkeit einzustellen. In Abhängigkeit von der Drehstellung des Drehknopfes wird in der Mischeinrichtung 14 Flüssigkeit mit dem Dampf vermischt, so dass über den Auslass 20 ein Gemisch aus Dampf und Flüssigkeit abgegeben werden kann.

Üblicherweise kommt als Flüssigkeit Wasser zum Einsatz, das gelösten Kalk enthält. Durch die Erwärmung des Wassers bilden sich im Vorratstank 12 Kalkpartikel. Damit die Gefahr verringert werden kann, dass Kalkpartikel von der Flüssigkeit mitgerissen werden, ist der Strömungsquerschnitt der Flüssigkeitsauslassleitung 64 an dessen Eingang 68 bedeutend größer gewählt als der Strömungsquerschnitt des Flüssigkeitsauslasses 56 und des Ausgangs 70 der Flüssigkeitsentnahmeleitung. Dies hat zur Folge, dass die Flüssigkeit im Bereich des Eingangs 68 eine verhältnismäßig geringe Strömungsgeschwindigkeit aufweist, so dass allenfalls eine sehr geringe Menge an Kalkpartikel von der Flüssigkeit mitgerissen wird. Der sich an den Eingang 68 anschließende erste Leitungsabschnitt 72 wirkt als Beruhigungszone für die Flüssigkeit. Kalkpartikel, die von der Flüssigkeit mitgeführt werden, sinken schwerkraftsbedingt im Bereich des ersten Leitungsabschnitts 72 zur Bodenwand 30 und werden somit von der Flüssigkeit nicht länger mitgeführt. Darüber hinaus werden Kalkpartikel am Sieb 82 zurückgehalten. Im Bereich des zweiten Leitungsabschnitts 76 erhöht sich die Strömungsgeschwindigkeit der Flüssigkeit allmählich, bis sie die Stufe 78 erreicht, an der sich der Strömungsquerschnitt der Flüssigkeitsentnahmeleitung 66 sprunghaft verkleinert und die Strömungsgeschwindigkeit sprunghaft vergrößert. Die abrupte Änderung der Strömungsgeschwindigkeit hat zur Folge, dass Kalkpartikel, die möglicherweise bis in diesen Bereich mitgeführt werden, sich an der Stufe 78 abscheiden. Flüssigkeit, die aus dem Vorratstank 12 herausströmt, weist somit allenfalls einen sehr geringen Anteil an mitgeführten Kalkpartikeln auf. Die Gefahr, dass diese die strömungsabwärts angeordnete Mischeinrichtung 14 verstopfen, ist daher äußerst gering.

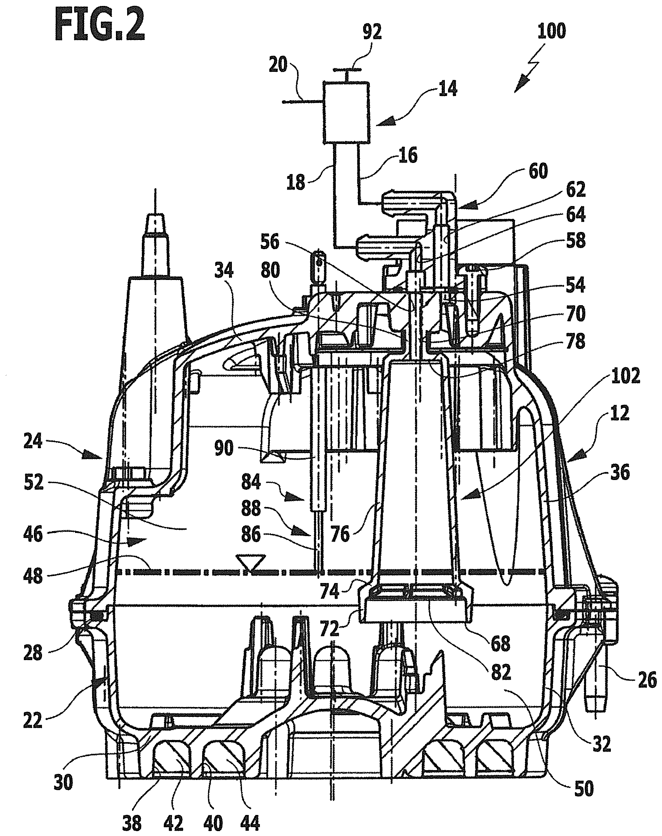

In den Figuren 2, 3 und 4 sind alternative Ausgestaltungen erfindungsgemäßer Dampfreinigungsgeräte dargestellt, die weitgehend identisch ausgebildet sind wie das in Figur 1 dargestellte Dampfreinigungsgerät 10. Für identisch Bauteile werden daher in den Figuren 2, 3 und 4 dieselben Bezugszeichen verwendet wie in Figur 1 und bezüglich dieser Bauteile wird zur Vermeidung von Wiederholungen auf die voranstehenden Erläuterungen Bezug genommen.

In Figur 2 ist ein Dampfreinigungsgerät 100 dargestellt, das sich von dem in Figur 1 dargestellten Dampfreinigungsgerät 10 lediglich dadurch unterscheidet, dass eine Flüssigkeitsauslassleitung 102 zum Einsatz kommt, die einstückig mit dem Oberteil 24 des Vorratstanks 12 verbunden ist. Das Oberteil 24 bildet bei dem Dampfreinigungsgerät 100 zusammen mit dessen Flüssigkeitsentnahmeleitung 102 ein einteiliges Bauteil aus. Dies erleichtert die Herstellung und Montage des Dampfreinigungsgerätes 100. Ansonsten stimmt die Flüssigkeitsentnahmeleitung 102 mit der voranstehend beschriebenen Flüssigkeitsentnahmeleitung 66 überein.

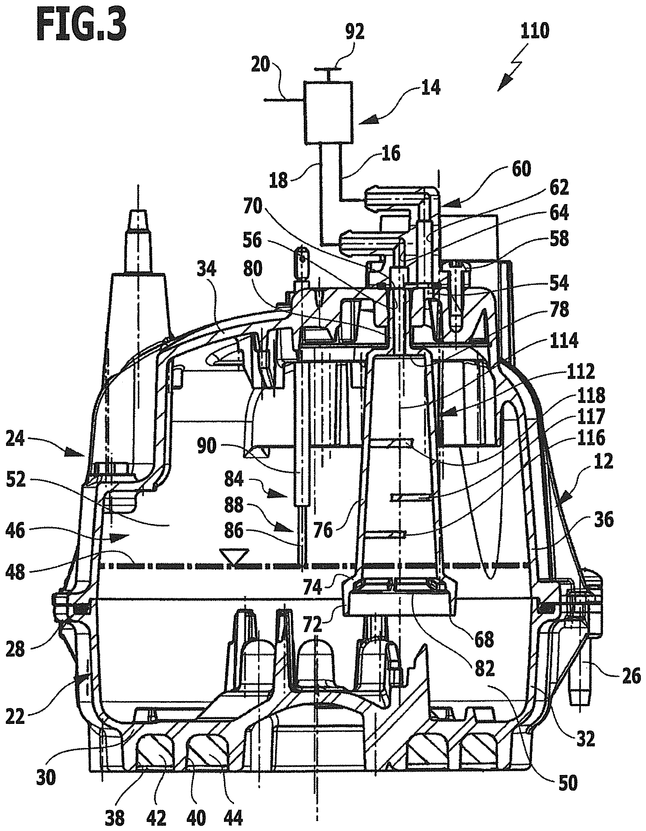

In Figur 3 ist eine dritte Ausführungsform eines erfindungsgemäßen Dampfreinigungsgerätes dargestellt, das insgesamt mit dem Bezugszeichen 110 belegt ist. Von dem in Figur 1 dargestellten Dampfreinigungsgerät 10 unterscheidet sich das Dampfreinigungsgerät 110 durch eine Flüssigkeitsentnahmeleitung 112, die mehrere senkrecht zur Längsachse 114 der Flüssigkeitsentnahmeleitung 112 ausgerichtete Prallwände 116, 117 und 118 aufweist, die ein Strömungslabyrinth ausbilden. Flüssigkeit, die die Flüssigkeitsentnahmeleitung 112 durchströmt, erfährt an den Prallwänden 116, 117 und 118 eine starke Änderung ihrer Strömungsrichtung. Dies hat zur Folge, dass eventuell mitgeführte Kalkpartikel zu einem großen Anteil auf die Prallwände 116, 117, 118 auftreffen und sich dort abscheiden. Somit kann die Gefahr, dass die Mischeinrichtung 14 durch Kalkpartikel verstopft wird, besonders gering gehalten werden.

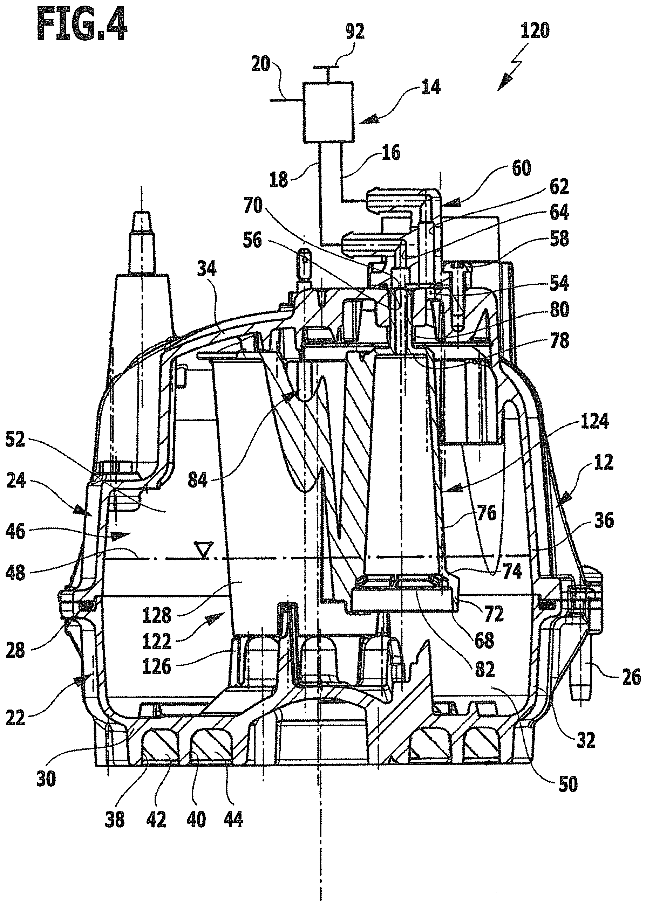

In Figur 4 ist eine vierte Ausführungsform eines erfindungsgemäßen Dampfreinigungsgerätes dargestellt, das insgesamt mit dem Bezugszeichen 120 belegt ist. Bei dieser Ausführungsform ist der Füllstandssensor 84 in Umfangsrichtung von einem Schutzelement 122 umgeben, in das die Flüssigkeitsentnahmeleitung 124 des Dampfreinigungsgerätes 120 integriert ist. In ihrer Form entspricht die Flüssigkeitsentnahmeleitung 124 der in Figur 1 dargestellten Flüssigkeitsentnahmeleitung 66, allerdings bildet die Flüssigkeitsentnahmeleitung 124 zusammen mit dem Schutzelement 122 ein einteiliges Bauteil aus. Das Schutzelement 122 ist im Wesentlichen kegelstumpfförmig ausgestaltet und an Stützrippen 126 gehalten, die von der Bodenwand 30 des Vorratstanks 12 des Dampfreinigungsgerätes 120 nach oben abstehen. Das Schutzelement 122 schützt den Füllstandssensor 84 vor Luftblasen, die im Bereich der beiden Heizleiter 42, 44 an der Bodenwand 30 entstehen und die Füllstandsmessung beeinträchtigen könnten. Das kegelstumpfförmige Schutzelement 122 erstreckt sich bis in einen Bereich der Bodenwand 30 innerhalb des inneren Heizleiters 44 und erweitert sich in Richtung auf die Deckenwand 34 kontinuierlich. Das Schutzelement 122 umfasst eine geschlossene Umfangswand 128, die sich von den Stützrippen 126 bis zur Deckenwand 34 erstreckt und in die die Flüssigkeitsentnahmeleitung 124 integriert ist.

Sämtliche voranstehend erläuterte Ausführungsformen der Erfindung zeichnen sich dadurch aus, dass praktisch keine Gefahr einer Verstopfung der Mischeinrichtung 14 durch Kalkpartikel besteht. Hierzu kommt jeweils eine Flüssigkeitsentnahmeleitung 66, 102, 112 bzw. 124 zum Einsatz, deren Strömungsquerschnitt am Eingang 68 deutlich größer gewählt ist als am Ausgang 70 und am Flüssigkeitsauslass 56. Die Strömungsgeschwindigkeit der Flüssigkeit ist am Eingang 68 verhältnismäßig gering, so dass praktisch keine Gefahr besteht, dass Kalkpartikel mitgerissen werden. Der Strömungsquerschnitt des Flüssigkeitsauslasses 56 ist dagegen verhältnismäßig gering gewählt, so dass Wärmeverluste des Vorratstanks 12 limitiert werden können.

## Patentansprüche

1. Dampfreinigungsgerät mit einem elektrisch beheizbaren Vorratstank (12) für eine Flüssigkeit, der einen Dampfauslass (54) und einen Flüssigkeitsauslass (56) aufweist, und mit einer Mischeinrichtung (14), die über eine erste Verbindungsleitung (16) mit dem Dampfauslass (54) und über eine zweite Verbindungsleitung (18) mit dem Flüssigkeitsauslass (56) verbunden ist und die einen gemeinsamen Auslass (20) für flüssiges und dampfförmiges Medium aufweist, und mit einer einen Eingang (68) und einen Ausgang (70) aufweisenden Flüssigkeitsentnahmeleitung (66), wobei Flüssigkeit aus dem Innenraum (46) des Vorratstanks (12) vom Eingang (68) der Flüssigkeitsentnahmeleitung (66) über deren Ausgang (70) der Mischeinrichtung (14) zuführbar ist, wobei der Strömungsquerschnitt des Eingangs (68) der Flüssigkeitsentnahmeleitung (66; 102; 112; 124) größer ist als der Strömungsquerschnitt des Flüssigkeitsauslasses (56), **dadurch gekennzeichnet, dass** der Strömungsquerschnitt des Eingangs (68) der Flüssigkeitsentnahmeleitung (66; 102; 112; 124) mindestens zehnmal so groß ist wie der Strömungsquerschnitt des Flüssigkeitsauslasses (56).

2. Dampfreinigungsgerät nach Anspruch 1, **dadurch gekennzeichnet, dass** sich der Strömungsquerschnitt der Flüssigkeitsentnahmeleitung (66; 102; 112; 124) im Bereich zwischen dem Eingang (68) und dem Ausgang (70) verkleinert.

3. Dampfreinigungsgerät nach Anspruch 1 oder 2, **dadurch gekennzeichnet, dass** sich der Strömungsquerschnitt der Flüssigkeitsentnahmeleitung (66; 102; 112; 124) über mindestens eine Stufe (78) verkleinert.

4. Dampfreinigungsgerät nach einem der voranstehenden Ansprüche, **dadurch gekennzeichnet, dass** sich der Strömungsquerschnitt der Flüssigkeitsentnahmeleitung (66; 102; 112; 124) in mindestens einem Leitungsabschnitt (74, 76) kontinuierlich verkleinert.

5. Dampfreinigungsgerät nach einem der voranstehenden Ansprüche, **dadurch gekennzeichnet, dass** die Flüssigkeitsentnahmeleitung (66; 102; 112; 124) mindestens einen kegelstumpfförmigen Leitungsabschnitt (76) aufweist.

6. Dampfreinigungsgerät nach einem der voranstehenden Ansprüche, **dadurch gekennzeichnet, dass** die Flüssigkeitsentnahmeleitung (66; 102; 112; 124) als Steigleitung ausgestaltet ist, die in den Vorratstank (12) eintaucht.

7. Dampfreinigungsgerät nach einem der voranstehenden Ansprüche, **dadurch gekennzeichnet, dass** sich an den Eingang (68) der Flüssigkeitsentnahmeleitung (66; 102; 112; 124) ein erster Leitungsabschnitt (72) der Flüssigkeitsentnahmeleitung (66; 102; 112; 124) mit gleich bleibendem Strömungsquerschnitt anschließt.

8. Dampfreinigungsgerät nach einem der voranstehenden Ansprüche, **dadurch gekennzeichnet, dass** die Flüssigkeitsentnahmeleitung (66; 102; 112; 124) einen rohrförmigen Endabschnitt (80) aufweist, der sich in Strömungsrichtung der aus dem Innenraum (46) des Vorratstanks (12) herausströmenden Flüssigkeit an eine den Strömungsquerschnitt der Flüssigkeitsentnahmeleitung (66; 102; 112; 124) verringernden Stufe (78) anschließt.

## Claims

1. Steam cleaning appliance with an electrically heatable storage tank (12) for a liquid comprising a steam outlet (54) and a liquid outlet (56), and with a mixing device (14) which is connected to the steam outlet (54) by means of a first connecting line (16) and to the liquid outlet (56) by means of a second connecting line (18), and which has a common outlet (20) for liquid and vaporous media, and with a liquid withdrawal line (66) having an inlet (68) and an outlet (70), liquid from the interior (46) of the storage tank (12) being suppliable to the mixing device (14) from the inlet (68) of the liquid withdrawal line (66) via the outlet (70) thereof, the flow cross-section of the inlet (68) of the liquid withdrawal line (66; 102; 112; 124) being greater than the flow cross-section of the liquid outlet (56), **characterized in that** the flow cross-section of the inlet (68) of the liquid withdrawal line (66; 102; 112; 124) is at least 10 times greater than the flow cross-section of the liquid outlet (56).

2. Steam cleaning appliance according to claim 1, **characterized in that** the flow cross-section of the liquid withdrawal line (66; 102; 112; 124) decreases in the region between the inlet (68) and the outlet (70).

3. Steam cleaning appliance according to claim 1 or 2, **characterized in that** the flow cross-section of the liquid withdrawal line (66; 102; 112; 124) is reduced via at least one step (78).

4. Steam cleaning appliance according to any one of the preceding claims, **characterized in that** the flow cross-section of the liquid withdrawal line (66; 102; 112; 124) decreases continuously at least in one line portion (74, 76).

5. Steam cleaning appliance according to any one of the preceding claims, **characterized in that** the liquid withdrawal line (66; 102; 112; 124) has at least one line portion (76) in the shape of a truncated cone.

6. Steam cleaning appliance according to any one of the preceding claims, **characterized in that** the liquid withdrawal line (66; 102; 112; 124) is configured as a riser line which extends into the storage tank (12).

7. Steam cleaning appliance according to any one of the preceding claims, **characterized in that** a first line portion (72) of the liquid withdrawal line (66; 102; 112; 124) that has a constant flow cross-section adjoins the inlet (68) of the liquid withdrawal line (66; 102; 112; 124).

8. Steam cleaning appliance according to any one of the preceding claims, **characterized in that** the liquid withdrawal line (66; 102; 112; 124) has a tubular end portion (80) which adjoins a step (78) that reduces the flow cross-section of the liquid withdrawal line (66; 102; 112; 124) in the direction of flow of the liquid flowing out of the interior (46) of the storage tank (12).

## Revendications

1. Appareil de nettoyage à vapeur comprenant un réservoir de stockage (12) à chauffage électrique pour un liquide, lequel réservoir comporte une sortie de vapeur (54) et une sortie de liquide (56), l'appareil comprenant également un dispositif mélangeur (14), qui est raccordé à la sortie de vapeur (54) par l'intermédiaire d'une première conduite de raccordement (16) et à la sortie de liquide (56) par l'intermédiaire d'une deuxième conduite de raccordement (18) et qui comporte une sortie (20) commune pour un médium liquide et sous forme de vapeur, et une conduite de prélèvement de liquide (66) présentant une entrée (68) et une sortie (70), le liquide pouvant être amené de l'espace intérieur (46) du réservoir de stockage (12) depuis l'entrée (68) de la conduite de prélèvement de liquide (66) au dispositif mélangeur (14) en passant par la sortie (70) de ladite conduite, la section transversale d'écoulement de l'entrée (66 ; 102 ; 112 ; 124) de la conduite de prélèvement de liquide (56) étant plus grande que la section transversale d'écoulement de la sortie de liquide (56), **caractérisé en ce que** la section transversale d'écoulement de l'entrée (68) de la conduite de prélèvement de liquide (66 ; 102 ; 112 ; 124) est au moins dix fois plus grande que la section transversale d'écoulement de la sortie de liquide (56).

2. Appareil de nettoyage à vapeur selon la revendication 1, **caractérisé en ce que** la section transversale d'écoulement de la conduite de prélèvement de liquide (66 ; 102 ; 112 ; 124) se rétrécit dans la zone située entre l'entrée (68) et la sortie (70).

3. Appareil de nettoyage à vapeur selon la revendication 1 ou 2, **caractérisé en ce que** la section transversale d'écoulement de la conduite de prélèvement de liquide (66 ; 102 ; 112 ; 124) se rétrécit par au moins un niveau (78).

4. Appareil de nettoyage à vapeur selon l'une quelconque des revendications précédentes, **caractérisé en ce que** la section transversale d'écoulement de la conduite de prélèvement de liquide (66 ; 102 ; 112 ; 124) se rétrécit en continu dans au moins une section de conduite (74, 76).

5. Appareil de nettoyage à vapeur selon l'une quelconque des revendications précédentes, **caractérisé en ce que** la conduite de prélèvement de liquide (66 ; 102 ; 112 ; 124) comprend au moins une section de conduite (76) tronconique.

6. Appareil de nettoyage à vapeur selon l'une quelconque des revendications précédentes, **caractérisé en ce que** la conduite de prélèvement de liquide (66 ; 102 ; 112 ; 124) est réalisée sous la forme d'une conduite montante, qui s'introduit dans le réservoir de stockage (12).

7. Appareil de nettoyage à vapeur selon l'une quelconque des revendications précédentes, **caractérisé en ce qu'**une première section de conduite (72) de la conduite de prélèvement de liquide (66 ; 102 ; 112 ; 124) présentant une section transversale d'écoulement constante se raccorde à l'entrée (68) de la conduite de prélèvement de liquide (66 ; 102 ; 112 ; 124).

8. Appareil de nettoyage à vapeur selon l'une quelconque des revendications précédentes, **caractérisé en ce que** la conduite de prélèvement de liquide (66 ; 102 ; 112 ; 124) comprend une section d'extrémité tubulaire (80), qui se raccorde dans la direction d'écoulement du liquide sortant de l'espace intérieur (46) du réservoir de stockage (12) à un niveau (78) rétrécissant la section transversale d'écoulement de la conduite de prélèvement de liquide (66 ; 102 ; 112 ; 124).
